Europäisches Patentamt

European Patent Office

Office européen des brevets

(19)

(11) EP 1 428 836 A1

(12) EUROPEAN PATENT APPLICATION

(43) Date of publication:
16.06.2004 Bulletin 2004/25

(51) Int Cl.7: C08C 19/42, C08C 19/44,
C08F 236/12, B60C 1/00

(21) Application number: 03254250.8

(22) Date of filing: 04.07.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 12.12.2002 KR 2002079060

(71) Applicant: KOREA KUMHO PETROCHEMICAL
CO., LTD.
Seoul 110-061 (KR)

(72) Inventors:
• Ko, Young-Hoon
  Taejeon-city 305-345 (KR)

• Koh, Jae-Young
  Taejeon-city 305-345 (KR)
• Choi, Hung-Kyu
  Taejeon-city 305-345 (KR)
• Baik, Hun-Jong
  Taejeon-city 305-345 (KR)

(74) Representative: Nash, David Allan
Haseltine Lake,
Imperial House,
15-19 Kingsway
London WC2B 6UD (GB)

(54) **Radial copolymer prepared from mixed coupling agent**

(57) Disclosed is a copolymer prepared from a conjugated diene monomer and a vinyl aromatic monomer. The radial copolymer is prepared by coupling the terminal of a leaving polymer using a mixed coupling agent comprising the mixture of a multi-reactive polysiloxane and a tin halide compound, the leaving polymer being prepared by copolymerizing a conjugated diene monomer and a vinyl aromatic monomer in the presence of an organo lithium catalyst and a hydrocarbon solvent. The use of the radial copolymer improves the affinity to silica or carbon black used as a filler, and remarkably enhances processibility in the manufacture of tires as well as the properties (e.g., higher wet traction, lower rolling resistance, and higher tread wear) necessary for tires relative to the conventional products.

EP 1 428 836 A1

**Description**

**BACKGROUND OF THE INVENTION**

1.The Field of the Invention

This invention relates to a radial copolymer prepared from a conjugated diene monomer and a vinyl aromatic monomer. More specifically, the present invention relates to a radial copolymer useful for the manufacture of tires that has its molecular chain terminal coupled using a mixed coupling agent comprised of a mixture of multi-reactive polysiloxane and tin halide.

2. Related Prior Art

Conjugated diene polymers prepared using an organo lithium catalyst are controllable in regard to the vinyl content of the conjugated diene that cannot be controlled by the emulsion polymerization method, so that they are excellent in both wet traction and rolling resistance relative to the styrene-butadiene rubber (SBR) prepared by emulsion polymerization. If synthesized in the presence of an organo lithium catalyst, the polymer has multiple functional groups at the molecular chain terminal that make the cold flow controllable at the ambient temperature and particularly enhance the compatibility with a reinforcing material for tires, such as carbon black or silica, thereby enhancing treadwear, reducing rolling resistance and increasing wet traction.

When the molecular chain terminal of the copolymer prepared by solution polymerization in the presence of an organo lithium catalyst is substituted using a tin coupling agent, the above-mentioned effects can be achieved in the carbon black mixed rubbers because the tin compound has a high compatibility with the carbon black. But, the use of the tin compound as a coupling agent may lead to a low binding capacity (Sn-C bonding) between the tin compound and the rubber, so that the Sn-C bonding can be broken under the physical force during the mixing step, thereby deteriorating mechanical properties of the rubber. For that reason, the use of tin-coupled rubber is restrained in the manufacture of silica-mixed rubber tires of which the processing conditions are much stricter than those of the carbon black mixed rubbers (U. S. Patent No. 4,397,994).

On the other hand, an approach to enhance the compatibility of the rubber with carbon black involves conversion of the molecular chain terminal to benzophenone, which is a sort of amine compounds, attaining more excellent dynamic characteristics and mechanical properties than the existing rubber materials. The rubbers prepared by this method are, however, inferior in processability during the mixing step and long-term storage due to its high cold flow that is as a key factor of storage stability (U. S. Patent Nos. 4,555,548 and 5,219,945).

For examples of the approach for increasing the compatibility with silica used as an inorganic reinforcing material disclose a method of dispersing polydimethylsiloxane in a styrene-based resin composition to enhance tread wear and cold impact resistance remarkably. But the polymer complex prepared by dispersion of polydimethylsiloxane is susceptible to phase separation because it has no covalent bond between the polydimethylsiloxane and the organic polymer resin. Moreover, they are inferior in affinity to inorganic fillers, causing a deterioration of the compatibility, because the polydimethyl siloxane contains neither polar groups nor hydrophilic groups.

Accordingly, the modification of polymers that are organic materials ready for reactions is necessary in the improvement of mutual compatibility for the purpose of developing the above-described organic and inorganic composite material. So, many studies have been made on the modification of polymers using physical methods. For example, it discloses a polymerization of hexamethylcyclotrisiloxane at the terminal of the living polymer block. This approach may solve the problem with the organic separation of polysiloxane from the organic layer, but results in a low affinity to organic fillers and hence a deterioration of the compatibility as in the above-stated technologies, because the polydimethylsiloxane has no functional group including a polar group or a hydrophilic group.

To solve this problem, there are some cases where the living anionic polymer terminal is reacted with ethylene oxide (J. Polym. Sci., Part A: Polym. Chem., 26, 2031 (1988)); diphenylethylene (J. Polm. Sci., Part A: Polym. Chem., 30, 2349 (1992)); or N-(benzylidene)-trimethylsilylamine (Makromol. Chem., 184, 1355 (1983)), which compounds contain no siloxane group and are limited in acquiring a satisfactory compatibility with inorganic fillers.

Accordingly, there is a demand for polymers containing polar groups and using a novel coupling agent susceptible to reaction with a living polymer anion.

Another approach has been suggested that acquires enhanced properties in carbon black mixing by using the mixture of tin halide and silicon halide as a coupling agent for the terminal of the polymer (U. S. Patent No. 6,329,467 B1). The coupling agent contains no functional group having the affinity to silica, deteriorating the compatibility of the polymer with silica. So the use of the coupling agent is restrained in the manufacture of silica-mixed rubber tires.

## SUMMARY OF THE INVENTION

In an attempt to develop rubbers having an improved compatibility with silica, an affinity to carbon black, and an excellent processibility in the manufacture of tires, the present invention has been contrived on the basis of the fact that the rubber for tires with enhanced mechanical properties and dynamic properties (e.g., wet traction and rolling resistance) relative to the conventional rubbers can be provided by modifying the terminal of the rubber using a mixture of a polysiloxane compound having a high affinity to an inorganic material, silica and a tin halide compound having a good processibility with carbon black.

It is therefore an object of the present invention to provide a radial copolymer for enhancing the mechanical properties and the dynamic properties of a silica-carbon black mixed rubber for tires relative to the conventional rubber materials.

To achieve the object of the present invention, there is provided a radial copolymer prepared by coupling the terminal of a living polymer using a mixed coupling agent comprising a mixture of a multi-reactive polysiloxane represented by the following formula 1 and a tin halide represented by the following formula 2, the living polymer being prepared by copolymerizing a conjugated diene monomer and a vinyl aromatic monomer in the presence of an organo lithium catalyst in a hydrocarbon solvent and a Lewis base:

Formula 1

$$(X)_a(R)_bY\text{-}(CH_2)_c\text{-}Si(R_1)(R_2)\text{-}[O\text{-}Si(R_1)(R_2)]_d\text{-}(CH_2)_c\text{-}Y(X)_a(R)_b$$

where X is a halogen atom such as F, Cl, Br or I; Y is Si or C; R is a lower alkyl group containing less than 20 carbon atoms, such as methyl, ethyl or propyl, or $(X)_e(R_3)_f$Bz; $R_1$ and $R_2$ are the same as R, hydrogen, halogen-substituted alkyl group, or halogen-substituted silane group; $R_3$ is a lower alkyl group containing less than 20 carbon atoms, hydrogen, halogen-substituted alkyl group, or halogen-substituted silane group; a is 1 to 3, and b is 0 to 2, wherein a+b = 3; c is 1 to 10; d is 1 to 50000, preferably 1 to 100; e and f are independently 0 to 5, where e+f=5; and Bz is a benzene ring;

Formula 2

$$Sn(R)_{4-n}(X)_n$$

where R is a lower alkyl group containing less than 20 carbon atoms, such as methyl, ethyl or propyl; X is a halogen atom such as F, Cl, Br or I; and n is an integer from 1 to 3.

The present invention will now be described in further detail as follows.

The copolymer of the present invention is prepared from a conjugated diene monomer and a vinyl aromatic monomer. The specific examples of the conjugated diene monomer as used herein may include butadiene or isoprene compounds, and those of the vinyl aromatic monomer as used herein may include styrene or α-methyl styrene.

Typically, the copolymer comprises 5 to 50 wt.% of the vinyl aromatic compound, and 50 to 95 wt.% of the conjugated diene compound. If the content of the styrene compound is less than 5 wt.%, then neither tread wear nor wet traction can be enhanced; otherwise, if the content of the styrene compound exceeds 5 wt.%, then neither tread wear nor exothermic characteristic can be enhanced.

The copolymer of the present invention is prepared by copolymerizing the monomers in the presence of an organo lithium catalyst in a hydrocarbon solvent to yield a living polymer, and then coupling the living polymer to a molecular chain terminal using a coupling agent. The specific examples of the organo lithium catalyst used for forming the living polymer may include hydrocarbons having at least one lithium atom, for example, ethyl lithium, propyl lithium, n-butyl lithium, sec-butyl lithium, tert-butyl lithium, phenyl lithium, propenyl lithium, hexyl lithium, 1,4-dilithio-n-butane, 1,3-di(2-lithio-2-hexyl)benzene, etc. The preferred organo lithium catalysts are n-butyl lithium, and sec-butyl lithium. These organo lithium catalysts can be used alone or in combination of at least two. The content of the organo lithium catalyst, which may be dependent upon the desired molecular weight of the polymer product, is typically 0.1 to 5 mmol and preferably 0.3 to 3 mmol per 100 g of the monomers.

The specific examples of the hydrocarbon solvent as used for polymerization may include n-hexane, n-heptane, iso-octane, cyclohexane, methylcyclopentane, benzene, and toluene. The preferred hydrocarbon solvents are n-hexane, n-heptane, and cyclohexane.

In solution polymerization, the content of the monomers in the hydrocarbon solvent is 5 to 40 wt.%, and preferably about 10 to 25 wt.%.

The addition of the organo lithium compound and the Lewis base, tetrahydrofuran initiates the polymerization reaction. The tetrahydrofuran as a Lewis base is preferably used in an amount of about 50 to 45,000 ppm in the hydrocarbon solvent. The initiation temperature of the polymerization reaction is typically about 0 to 60 °C, and preferably about 10 to 50 °C. The reaction pressure is preferably 0 to 5 kgf/cm$^2$.

The polymerization reaction proceeds for a sufficient period of time until the monomers are all converted to the copolymer. In other words, the polymerization reaction is performed until a high conversion rate is achieved. Typically, the reaction time is 30 to 200 minutes.

The specific examples of the Lewis base used for controlling the fine structure of the polymer may include tetrahydrofuran(THF), N,N,N,N-tetramethylethylenediamine (TMEDA), di-n-propyl ether, di-isopropyl ether, di-n-butyl ether, ethyl butyl ether, triethylene glycol, 1,2-dimethoxybenzene, trimethylamine, or triethylamine. The preferred Lewis bases are tetrahydrofuran, and N,N,N,N-tetramethylethylenediamine.

The copolymer of the present invention is prepared by transforming the active terminal of the polymer using the mixture of a multi-reactive polysiloxane compound and a tin halide compound at the end of the reaction.

The polysiloxane compound as used herein is a reactive polysiloxane compound having the structure represented by the formula 1. The specific examples of the polysiloxane compound may include α,ω-bis(2-trichlorosilylethyl) polydimethylsiloxane, α,ω-bis(2-dichloromethylsilylethyl)polydimethylsiloxane, and α,ω-bis(2-chlorodimethylsilylethyl) polydimethylsiloxane.

The tin halide compound is a compound represented by the formula 2, and the specific examples may include tin tetrachloride, trichloromethyl tin, dichloromethyl tin, and trimethyl tin chloride. The preferred tin halide compounds are tin tetrachloride, and trimethyl tin chloride.

In the mixed coupling agent, the mole ratio of the polysiloxane compound represented by the formula 1 to the tin halide compound is preferably 5:95 to 95:5.

The content of the mixed coupling agent is an amount of 0.01 to 3 mmol with respect to the organo lithium catalyst.

The Mooney viscosity ($ML_{1+4@}100$) of the polymer obtained is 10 to 160, and typically 30 to 150. The vinyl content of the conjugated diene compound in the fine structure is 10 to 90 wt.%, and typically 30 to 80 wt.%.

The analysis of the polymer synthesized in the present invention was performed in regard to the fine structure of the conjugated diene compound, the compositions of the conjugated diene compound and the aromatic vinyl compound, and the random and block proportions of the conjugated diene compound and the aromatic vinyl compound by using the nuclear magnetic resonance (NMR); the molecular weight (Mw) and the molecular weight distribution (MWD) by using the gel permeation chromatography (GPC); and the Mooney viscosity of the rubber with a Mooney viscometer.

## DETAILED DESCRIPTION OF THE INVENTION

Hereinafter, the present invention will be described in detail by way of the following examples, which describe the preparation method, the degree of coupling, the Mooney viscosity, and the vinyl bonding in the polymer of the SBR random copolymer according to the present invention. The examples are not intended to limit the scope of the present invention. If not specifically mentioned otherwise, the percentage (%) is reduced based on the weight, and the added amount of the randomizer is based on the total amount of the solvent, cyclohexane.

Example 1

In this example, the coupling agent is prepared by mixing the polysiloxane compound and the tin tetrachloride at different mixing ratios, and the coupling rate change, the properties and the processability according to the different mixing ratios were analyzed.

204g(33.3wt.%) of styrene, 396g (64.7wt.%) of 1,3-butadiene and 3,000g of cyclohexane were added to a 10L-reactor, and then 15g (5,000 ppm in cyclohexane) of tetrahydrofuran was added to the mixture in the reactor. The internal temperature of the reactor was controlled at 35 °C while operating a mixer. Once the temperature of the reactor reached a predetermined value, 2.7 mmol of n-butyl lithium was added to activate an adiabatic warming reaction. The moment that the reaction temperature was at maximum, another 12g (2.0 wt.%) of 1,3-butadiene was added so as to substitute the reactive terminal with butadiene.

Following the second addition of butadiene, 0.3 mmol of polysiloxane halide (Number average molecular weight, Mn 1345) of which the structure is represented by the formula 3 and the number "d" of the repeating units, -O-Si(CH$_3$)$_2$- is 13, and 0.068 mmol of tin tetrachloride were added to the reactor. The reaction mixture was kept for a predetermined period of time to active a coupling reaction. After the completion of the coupling reaction, 6g (1 phr) of an antioxidant, butylated hydroxy toluene (BHT) was added to the reactor to terminate the reaction.

The polymerized product was added to a steamed warm water to remove the solvent, and then roll-dried to remove the residual solvent and water.

Subsequently, the final product was analyzed in regard to the molecular fine structure using the NMR, the molecular weight, the coupling degree and the molecular weight distribution using the GPC, and the dynamic characteristic of rubber using the DMTA. The result is presented in Table 1.

Formula 3

$$(X)_a(R)_b Si\text{-}CH_2CH_2\text{-}Si(CH_3)_2\text{-}[O\text{-}Si(CH_3)_2]_d\text{-}CH_2CH_2\text{-}Si(X)_a(R)_b$$

where X, R, a, b and d are as defined above in the formula 1.

Example 2

The procedure was performed in the same manner as described in Example 1, excepting that 0.257 mmol of polysiloxane halide (Mn 1345) of which the structure is represented by the formula 3 and the number "d" of the repeating units, -O-Si(CH_3)_2- is 13, and 0.111 mmol of tin tetrachloride were added to the reactor. The reaction mixture was kept for a predetermined period of time to active a coupling reaction. After the completion of the coupling reaction, 6g (1 phr) of an antioxidant, BHT was added to the reactor to terminate the reaction.
The subsequent procedure was performed in the same manner as described in Example 1. The result of the polymer analysis is presented in Table 1.

Example 3

The procedure was performed in the same manner as described in Example 1, excepting that 0.368 mmol of polysiloxane halide (Mn 1345) of which the structure is represented by the formula 3 and the number "d" of the repeating units, -O-Si(CH_3)_2- is 13 was added to the reactor. The reaction mixture was kept for a predetermined period of time to active a coupling reaction. After the completion of the coupling reaction, 1.09 mmol of trimethyl tin chloride was added to the reactor to substitute the reactive terminal with the tin compound, and 6g (1 phr) of an antioxidant, BHT was added to terminate the reaction.
The subsequent procedure was performed in the same manner as described in Example 1. The results of the polymer analysis are presented in Table 1.

Example 4

In this example, the coupling rate change, the properties and the processability according to the molecular weight of the polysiloxane compound used as a coupling agent were analyzed.
0.257 mmol of polysiloxane halide (Mn 901) of which the structure is represented by the formula 3 and the number "d" of the repeating units, -O-Si(CH_3)_2- is 7, and 0.111 mmol of tin tetrachloride were added to the reactor. After the completion of the coupling reaction, 6g (1 phr) of an antioxidant, BHT was added to the reactor to terminate the reaction.
The subsequent procedure was performed in the same manner as described in Example 1. The results of the polymer analysis are presented in Table 1.

Example 5

In this example, the coupling rate change, the properties and the processability according to the molecular weight of the polysiloxane compound used as a coupling agent were analyzed.
0.257 mmol of polysiloxane halide (Mn 1863) of which the structure is represented by the formula 3 and the number "d" of the repeating units, -O-Si(CH_3)_2- is 20, and 0.111 mmol of tin tetrachloride were added to the reactor. After the completion of the coupling reaction, 6g (1 phr) of an antioxidant, BHT was added to the reactor to terminate the reaction.
The subsequent procedure was performed in the same manner as described in Example 1. The result of the polymer analysis is presented in Table 1.

Table 1

| | Coupling rate (%) | Mooney Mooney viscosity viscosity (ML$_{1+4@}$ 100 °C) (ML$_{1+4@}$100°C) before after addition addition of oil of oil* | | Styrene content (%) | Vinyl content (%) | Molecular weight distribution |
|---|---|---|---|---|---|---|
| Example 1 | 58 | 128 | 52 | 33.3 | 36.2 | 2.10 |
| Example 2 | 57 | 126 | 50 | 33.3 | 36.3 | 1.90 |
| Example 3 | 59 | 129 | 53 | 33.3 | 36.5 | 1.85 |
| Example 4 | 58 | 127 | 52 | 33.3 | 36.2 | 1.95 |
| Example 5 | 59 | 129 | 53 | 33.3 | 36.1 | 2.01 |

Note: * Mooney viscosity after adding 37.5 phr of aromatic oil.

Comparative Example 1

This comparative example is for preparing a styrene-butadiene copolymer using the technology of the present invention.

204g(33.3wt.%) of styrene, 396g (64.7wt.%) of 1,3-butadiene and 3,000g of cyclohexane were added to a 10L-reactor, and then 15g (5,000 ppm in cyclohexane) of tetrahydrofuran was added to the mixture in the reactor. The internal temperature of the reactor was controlled at 35 °C while operating a mixer. Once the temperature of the reactor reached a predetermined value, 2.7 mmol of n-butyl lithium was added to activate an adiabatic warming reaction. The degree of polymerization reaction was determined by observation of the reaction temperature change, and a small amount of the reactant was collected at any time during the reaction to analyze the percentage of the monomers and the conversion rate. The moment that the reaction temperature was at maximum, another 12g (2.0 wt.%) of 1,3-butadiene was added so as to substitute the reactive terminal with butadiene.

Following the second addition of butadiene, 0.368 mmol of a coupling agent, α,ω-bis(2-trichlorosilylethyl) polydimethylsiloxane(Mn 1345) of which the structure is represented by the following formula 3 and the number "d" of the repeating units, -0-Si(CH$_3$)$_2$- is 13 was added to the reactor. The reaction mixture was kept for a predetermined period of time to active a coupling reaction. After the completion of the coupling reaction, 6 g (1 phr) of an antioxidant, BHT was added to the reactor to terminate the reaction.

The subsequent procedure was performed in the same manner as described in Example 1. The result of the polymer analysis is presented in Table 2.

Comparative Example 2

204g(33.3wt.%) of styrene, 396g (64.7wt.%) of 1,3-butadiene and 3,000g of cyclohexane were added to a 10L-reactor, and then 15g (5,000 ppm in cyclohexane) of tetrahydrofuran was added to the mixture in the reactor. The internal temperature of the reactor was controlled at 35 °C while operating a mixer. Once the temperature of the reactor reached a predetermined value, 2.7 mmol of n-butyl lithium was added to activate an adiabatic warming reaction. The degree of polymerization reaction was determined by observation of the reaction temperature change, and a small amount of the reactant was collected at any time during the reaction to analyze the monomer proportion and the conversion rate. The moment that the reaction temperature was at maximum, another 12g (2.0 wt.%) of 1,3-butadiene was added so as to substitute the reactive terminal with butadiene.

Following the second addition of butadiene, 0.40 mmol of tin tetrachloride was added to the reactor. The reaction mixture was kept for a predetermined period of time to active a coupling reaction, and then the polymerized rubber was analyzed in the same manner as described in Example 1. The result is presented in Table 2.

Comparative Example 3

204g(33.3wt.%) of styrene, 396g (64.7wt.%) of 1,3-butadiene and 3,000g of cyclohexane were added to a 10L-reactor, and then 15g (5,000 ppm in cyclohexane) of tetrahydrofuran was added to the mixture in the reactor. The internal temperature of the reactor was controlled at 35 °C while operating a mixer. Once the temperature of the reactor reached a predetermined value, 2.7 mmol of n-butyl lithium was added to activate an adiabatic warming reaction. The degree of polymerization reaction was determined by observation of the reaction temperature change, and a small amount of the reactant was collected at any time during the reaction to analyze the monomer proportion and the conversion rate. The moment that the reaction temperature was at maximum, another 12g (2.0 wt.%) of 1,3-butadiene was added so as to substitute the reactive terminal with butadiene. Following the second addition of butadiene, 0.40 mmol of silicon tetrachloride was added to the reactor. The reaction mixture was kept for a predetermined period of time to active a coupling reaction, and then the polymerized rubber was analyzed in the same manner as described in Example 1. The result is presented in Table 2.

Table 2

| | Coupling rate (%) | Mooney viscosity (ML$_{1+4@}$ 100°C) (ML$_{1+4@}$ 100°C) before ddition of oil of oil[1] | Mooney viscosity after addition of oil | Styrene content (%) | Vinyl content (%) | Molecular weight distribution[2] |
|---|---|---|---|---|---|---|
| Comparative Example 1 | 58 | 128 | 52 | 33.3 | 36.5 | 2.1 |
| Comparative Example 2 | 57 | 127 | 51 | 33.3 | 35.6 | 2.0 |
| Comparative Example 3 | 58 | 129 | 53 | 33.3 | 36.2 | 2.0 |

Note:

(1) Mooney viscosity after adding 37.5 phr of aromatic oil.

(2) Molecular weight distribution: the distribution of the total molecular weight.

Experimental Examples 1 to 8

The polymer prepared in the above examples and comparative examples were used for silica mixing to compare the mixing processability, properties and dynamic characteristics after the mixing. Mix proportions of ingredients are presented in Table 3, and the measurements of properties and dynamic characteristics are presented in Table 4.

Table 3

| Ingredient | Content (g) |
|---|---|
| Polymer | 100 |
| Stearic acid | 2.0 |
| ZnO | 3.0 |
| Silica #175 | 50 |
| Aromatic oil | 20 |
| Si-69 | 4.0 |
| CZ | 2.0 |
| DPG | 2.0 |
| Sulfur | 1.6 |
| Total | 184.6 |

Note)
* Si-69: Bis-(triethoxysilylpropyl)tetrasulfane
* DPG: 1,3-diphenyl guanidine
* CZ: N-cyclohexyl benzothiazyl sulfenamide

Table 4

| | A1 | A2 | A3 | A4 | A5 | A6 | A7 | A8 |
|---|---|---|---|---|---|---|---|---|
| Copolymer | B1 | B2 | B3 | C1 | C2 | C3 | C4 | C5 |
| Coupling agent | PS[1) | SnCl$_4$ | SiCl$_4$ | PS[1)/ SnCl$_4$ | PS[1)/ SnCl$_4$ | PS[1)/ SnCl(Me)$_3$ | PS[2)/ SnCl$_4$ | PS[3)/ SnCl$_4$ |
| Mole ratio(%) of Coupling agent | 100 | 100 | 100 | 81.5/ 18.5 | 69.8/ 30.2 | 25.2/ 74.8 | 69.8/ 30.2 | 69.8/ 30.2 |
| Mooney viscosity (ML$_{1+4}$@100) | 100 | 80 | 99 | 88 | 85 | 99 | 86 | 85 |
| Hardness (Shore-A) | 66 | 67 | 66.5 | 66 | 66 | 67 | 66 | 66 |
| Tensile strength (kgf/cm$^2$) | 176 | 147 | 170 | 174 | 172 | 174 | 175 | 176 |
| 300% Modulus (kgf/cm$^2$) | 98 | 85 | 89 | 95 | 94 | 95 | 95 | 93 |
| Percentage of elongation (%) | 460 | 500 | 490 | 450 | 480 | 490 | 480 | 470 |
| Tg (°C) | -7.9 | -9.4 | -9.7 | -8.4 | -8.2 | -9.1 | -8.2 | -8.0 |
| Tan δ at 0 °C | 0.681 7 | 0.6764 | 0.6690 | 0.695 0 | 0.6901 | 0.6955 | 0.7010 | 0.7113 |
| Tan δ at 60 °C | 0.071 7 | 0.0786 | 0.0725 | 0.070 2 | 0.0710 | 0.0710 | 0.0711 | 0.0698 |

Note)
A: Experimental Example
B: Comparative Example
C: Example
PS[1): Multi-reactive polysiloxane (Mn 1345), Me : methyl group
PS[2): Multi-reactive polysiloxane (Mn 901)
PS[3): Multi-reactive polysiloxane (Mn 1863)

Experimental Examples 9 to 16

The polymer prepared in the above examples and comparative examples were used for silica-carbon black compounding to compare the mixing processability, and the properties and dynamic characteristics after the mixing. Mix proportions of ingredients are presented in Table 5, Measurements of properties and dynamic characteristics are presented in Table 6.

Table 5

| Ingredient | Content (g) |
|---|---|
| Polymer | 100 |
| Stearic acid | 2.0 |
| ZnO | 3.0 |
| Silica #175 | 20 |
| Carbon black (N-330) | 30 |
| Aromatic oil | 18.0 |
| Si-69 | 1.6 |
| CZ | 2.0 |
| DPG | 2.0 |
| Sulfur | 1.5 |
| Total | 180.1 |
| Note)<br>* Si-69: Bis-(triethoxysilylpropyl)tetrasulfane<br>* DPG: 1,3-diphenyl guanidine<br>* CZ: N-cyclohexyl benzothiazyl sulfenamide | |

Table 6

| | A9 | A10 | A11 | A12 | A13 | A14 | A15 | A16 |
|---|---|---|---|---|---|---|---|---|
| Copolymer | B1 | B2 | B3 | C 1 | C2 | C3 | C4 | C5 |
| Coupling agent | $PS^{1)}$ | $SnCl_4$ | $SiCl_4$ | $PS^{1)}/$ $SnCl_4$ | $PS^{1)}/$ $SnCl_4$ | $PS^{1)}/$ $SnCl(Me)_3$ | $PS^{2)}/$ $SnCl_4$ | $PS^{3)}/$ $SnCl_4$ |
| Mole ratio(%) of coupling agent | 100 | 100 | 100 | 81.5/ 18.5 | 69.8/ 30.2 | 25.2/ 74.8 | 69.8/ 30.2 | 69.8/ 30.2 |
| Mooney viscosity $(ML_{1+4@}100)$ | 65 | 55 | 64 | 60 | 59 | 65 | 59 | 58 |
| Hardness (Shore-A) | 64 | 63 | 64 | 64.5 | 64 | 63.5 | 65 | 64 |
| Tensile strength $(kgf/cm^2)$ | 210 | 190 | 195 | 220 | 215 | 215 | 215 | 220 |
| 300% Modulus $(kgf/cm^2)$ | 98 | 93 | 95 | 100 | 96 | 102 | 98 | 99 |
| Percentage of elongation (%) | 510 | 500 | 505 | 520 | 510 | 510 | 520 | 530 |
| Tg (°C) | -8.5 | -10.2 | -9.5 | -8.2 | -8.4 | -9.4 | -8.5 | -8.6 |
| Tan $\delta$ at 0 °C | 0.7325 | 0.6953 | 0.7012 | 0.7631 | 0.7521 | 0.7723 | 0.7621 | 0.770 1 |
| Tan $\delta$ at 60 °C | 0.0801 | 0.0853 | 0.0876 | 0.0702 | 0.0715 | 0.0709 | 0.0715 | 0.071 2 |
| Note) A: Experimental Example B: Comparative Example C: Example $PS^{1)}$: Multi-reactive polysiloxane (Mn 1345), Me : methyl group $PS^{2)}$: Multi-reactive polysiloxane (Mn 901) $PS^{3)}$: Multi-reactive polysiloxane (Mn 1863) | | | | | | | | |

As described above, when using the rubber prepared by using a mixed coupling agent of the multi-reactive polysiloxane represented by the formula 1 and the tin compound represented by the formula 2 as a material for tires, the multi-reactive polysiloxane and the tin halide compound used for the coupling agent lead to a remarkable increase in the compatibility with reinforcing materials used in the manufacture of tires, i.e., silica and carbon black, relative to conventional products, improving of the manufacturing processability of tires. Substantially, the use of an inorganic filler consisting of carbon black or silica solely, or a silica-carbon black mixed inorganic filler enhances the tread wear necessary for tires in the mixing, with a high wet traction and a low rolling resistance, and improves properties in the aspect of mixing processability.

**Claims**

1. A radial copolymer prepared by coupling a terminal of a living polymer using a mixed coupling agent comprising a mixture of a multi-reactive polysiloxane represented by the following formula 1 and a tin halide represented by the following formula 2, wherein living polymer being prepared by copolymerizing a conjugated diene monomer and a vinyl aromatic monomer in the presence of an organo lithium catalyst in a hydrocarbon solvent and a Lewis base:

Formula 1

$$(X)_a(R)_b Y\text{-}(CH_2)_c\text{-}Si(R_1)(R_2)\text{-}[O\text{-}Si(R_1)(R_2)]_d\text{-}(CH_2)_c\text{-}Y(X)a(R)_b$$

wherein X is a halogen atom such as F, Cl, Br or I; Y is Si or C; R is a lower alkyl group containing less than 20 carbon atoms, such as methyl, ethyl or propyl, or $(X)_e(R_3)_f Bz$; $R_1$ and $R_2$ are the same as R, hydrogen, halogen-substituted alkyl group, or a halogen-substituted silane group; $R_3$ is a lower alkyl group containing less than 20 carbon atoms, hydrogen, halogen-substituted alkyl group, or a halogen-substituted silane group; a is 1 to 3, and b is 0 to 2, wherein a+b = 3; c is 1 to 10; d is 1 to 50000; e and f are independently 0 to 5, wherein e+f = 5; and Bz is a benzene ring;

Formula 2

$$Sn(R)_{4\text{-}n}(X)_n$$

wherein R is a lower alkyl group containing less than 20 carbon atoms, such as methyl, ethyl or propyl; X is a halogen atom such as F, Cl, Br or I; and n is an integer from 1 to 3.

2. The radial copolymer as claimed in claim 1, wherein d is from 1 to 100.

3. The radial copolymer as claimed in claim 1 or 2, wherein the conjugated diene monomer includes 1,3-butadiene or isoprene, and the vinyl aromatic monomer includes styrene or alpha-methyl styrene.

4. The radial copolymer as claimed in claim 1 or 2, wherein the multi-reactive polysiloxane represented by the formula 1 is at least one selected from the group consisting of α,ω-bis(2-trichlorosilylethyl)polydimethylsiloxane, α,ω-bis (2-dichloromethylsilylethyl)polydimethylsiloxane, and α,ω-bis(2-chlorodimethylsilylethyl)polydimethylsiloxane.

5. The radial copolymer as claimed in claim 1 or 2, wherein the tin halide represented by the formula 2 is a trimethyl tin chloride, or tin tetrachloride.

6. The radial copolymer as claimed in claim 1 or 2, wherein the Lewis base is selected from tetrahydrofuran, N,N,N, N-tetramethylethylenediamine (TMEDA), di-n-propyl ether, di-isopropyl ether, di-n-butyl ether, ethyl butyl ether, triethylene glycol, 1,2-dimethoxybenzene, trimethylamine, or triethylamine.

7. The radial copolymer as claimed in claim 1, 2 or 5 wherein the Lewis base is an amount of 50 to 45,000 ppm with respect to the hydrocarbon solvent.

8. The radial copolymer as claimed in claim 1 or 2, wherein the mixed coupling agent comprises the multi-reactive polysiloxane and the tin halide at a mole ratio of 5:95 to 95:5.

9. The radial copolymer as claimed in claim 1, 2 or 8, wherein the mixed coupling agent is an amount of 0.01 to 3 mmol with respect to the organo lithium catalyst.

10. The radial copolymer as claimed in claim 1 or 2, wherein the conjugated diene monomer and vinyl aromatic monomer in the hydrocarbon solvent is 5 to 40 wt.%, wherein a content of the conjugated diene monomer is 50 to 95 wt.% and a content of the vinyl aromatic monomer is 5 to 50wt.%.

11. The radial copolymer as claimed in claim 1 or 2, wherein the organo lithium catalyst is included in an amount of 0.1 to 5 mmol per 100 g of the conjugated diene monomer and the vinyl aromatic monomer.

12. The radial copolymer as claimed in claim 1 or 2, wherein the hydrocarbon solvent is selected from n-hexane, n-heptane, iso-octane, cyclohexane, methylcyclopentane, benzene, or toluene.

13. The radial copolymer as claimed in claim 1 or 2, wherein the radial copolymer has a Mooney viscosity ($ML_{1+4@}100°C$) of 30 to 150, the conjugated diene monomer has an amount of 10 to 90 weight percent of vinyl content.

14. A tire tread formed from the radial copolymer of any preceding claim.

## European Patent Office

## EUROPEAN SEARCH REPORT

Application Number

EP 03 25 4250

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 1 221 460 A (KOREA KUMHO PETROCHEM CO LTD) 10 July 2002 (2002-07-10)<br>* page 3, lines 19-37 *<br>* page 3, line 55 - page 4, line 23 *<br>* examples 1,9 *<br>----- | 1-14 | C08C19/42<br>C08C19/44<br>C08F236/12<br>B60C1/00 |
| Y | EP 0 890 580 A (BRIDGESTONE CORP) 13 January 1999 (1999-01-13)<br>* page 3, line 54 - page 4, line 6 *<br>* page 4, lines 42-54 *<br>* page 5, lines 10-15 *<br>* page 5, lines 43-51 *<br>* examples 1-9 *<br>* tables 2a,2b,3,4 *<br>----- | 1-14 | |
| Y | EP 0 849 333 A (SUMITOMO RUBBER IND) 24 June 1998 (1998-06-24)<br>* page 2, lines 23-49 *<br>* page 3, line 56 - page 4, line 32 *<br>* page 5, lines 5-11 *<br>* examples 1-14 *<br>----- | 1-14 | |
| | | | TECHNICAL FIELDS SEARCHED (Int.Cl.7)<br><br>C08C<br>C08F<br>C08L<br>B60C |

The present search report has been drawn up for all claims

| Place of search | Date of completion of the search | Examiner |
|---|---|---|
| The Hague | 11 March 2004 | Denis, C |

**ANNEX TO THE EUROPEAN SEARCH REPORT
ON EUROPEAN PATENT APPLICATION NO.**                          EP 03 25 4250

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2004

| Patent document cited in search report | | Publication date | Patent family member(s) | | | Publication date |
|---|---|---|---|---|---|---|
| EP 1221460 | A | 10-07-2002 | KR | 2002057643 | A | 12-07-2002 |
| | | | EP | 1221460 | A2 | 10-07-2002 |
| | | | JP | 2002212227 | A | 31-07-2002 |
| | | | US | 2002123554 | A1 | 05-09-2002 |
| EP 0890580 | A | 13-01-1999 | US | 6008295 | A | 28-12-1999 |
| | | | CA | 2242310 | A1 | 11-01-1999 |
| | | | DE | 69818158 | D1 | 23-10-2003 |
| | | | EP | 0890580 | A1 | 13-01-1999 |
| | | | JP | 11228647 | A | 24-08-1999 |
| | | | US | 6228908 | B1 | 08-05-2001 |
| EP 0849333 | A | 24-06-1998 | JP | 10176080 | A | 30-06-1998 |
| | | | DE | 69704605 | D1 | 23-05-2001 |
| | | | DE | 69704605 | T2 | 02-08-2001 |
| | | | EP | 0849333 | A1 | 24-06-1998 |
| | | | US | 5929149 | A | 27-07-1999 |

EPO FORM P0459